# EUROPÄISCHE PATENTSCHRIFT

(11) **EP 1 327 969 B1**
(45) Veröffentlichungstag und Bekanntmachung des Hinweises auf die Patenterteilung: **11.05.2005**
(21) Anmeldenummer: 02027908.9
(22) Anmeldetag: 13.12.2002
(51) Int. Cl.: G08G 1/0967

(54) **Kraftfahrzeug mit Mitteln zum Erkennen eines Verkehrzeichens**
Vehicle with means for recognising traffic road signs
Véhicule avec moyens pour la reconnaissance de panneaux de signalisation routière

(30) Priorität: 11.01.2002 DE 10200784
(43) Veröffentlichungstag der Anmeldung: 16.07.2003
(73) Patentinhaber: AUDI AG, 85045 Ingolstadt (DE)
(72) Erfinder: Hofbauer, Manfred, 85092 Kösching (DE); Pfeffer, Frank, 85101 Lenting (DE)
(74) Vertreter: Thielmann, Frank

(56) Entgegenhaltungen:
- DE-A- 19 940 723
- US-A- 5 638 116
- US-B1- 6 265 968
- PATENT ABSTRACTS OF JAPAN vol. 014, no. 025 (P-991), 18. Januar 1990 (1990-01-18) -& JP 01 265400 A (NIPPON DENSO CO LTD), 23. Oktober 1989 (1989-10-23)
- PATENT ABSTRACTS OF JAPAN vol. 2000, no. 04, 31. August 2000 (2000-08-31) -& JP 2000 003438 A (MATSUSHITA ELECTRIC IND CO LTD), 7. Januar 2000 (2000-01-07)
- PATENT ABSTRACTS OF JAPAN vol. 1995, no. 03, 28. April 1995 (1995-04-28) -& JP 06 348991 A (SUMITOMO ELECTRIC IND LTD), 22. Dezember 1994 (1994-12-22)

## Beschreibung

Die Erfindung betrifft ein Kraftfahrzeug mit einem Bildaufnahmemittel zum Aufnehmen der mit dem Kraftfahrzeug befahrenen Fahrbahn und mit Verarbeitungs- und Auswertemitteln, die zum Bestimmen eines etwaigen im Bild sichtbaren Verkehrszeichens und dessen Regelungsinhalts ausgebildet sind.

Es sind bereits Kraftfahrzeuge bekannt, die unter Verwendung eines sogenannten TSR-Systems (TSR = traffic sign recognition) die automatische Erkennung von den Verkehr regelnden Verkehrszeichen, also beispielsweise in Form von Verkehrsschildern oder von Verkehrsleiteinrichtungen in Form von Wechselanzeigen erkennen und abhängig vom erkannten Verkehrszeichen steuernd oder regelnd in den Fahrzeugbetrieb eingreifen. Hierzu ist zum einen ein Bildaufnahmemittel wie eine kleine Kamera vorgesehen, die kontinuierlich die vom Fahrzeug befahrene Fahrbahn und aufgrund ihrer Ausrichtung durch die Frontscheibe auch noch die daneben liegenden Fahrbahnen oder Seitenstreifen aufnimmt. Dem Bildaufnahmemittel sind Verarbeitungs- und Auswertemittel zugeordnet, die die Bildverarbeitung und Bildanalyse dahingehend vornehmen, ob in dem Bild ein Verkehrszeichen dargestellt ist. Dies erfolgt auf Basis einer Zeichen- oder Mustererkennung, wozu entsprechende Algorithmen vorhanden sind. Zur Erfassung des Regelungsinhalts eines erkannten Verkehrszeichens wird dieses beispielsweise mit einem abgespeicherten Vergleichsverkehrszeichens verglichen um so zu erfassen, was das tatsächlich erkannte Bild aussagt. Nun besteht jedoch das Problem, dass mitunter andere Kraftfahrzeuge, vornehmlich Busse und LKW zur Angabe der von ihnen gefahrenen Höchstgeschwindigkeit rückseitig aufgeklebte Zeichen besitzen, die einem echten Verkehrsschild sehr ähnlich sind. Wird nun von dem Verkehrszeichenerkennungssystem ein solches Zeichen erfasst und fehlerhaft als Verkehrszeichen interpretiert, kann es zu einem ungewollten und mithin gefährlichen Steuerungs- oder Regelungseingriff seitens der Verarbeitungs- und Auswertemittel kommen.

In dem gattungsgemäßen Dokument JP-A-2000 003 438 wird eine Vorrichtung zur Erkennung von Verkehrszeichen vorgeschlagen, deren Erkennungsgenauigkeit verbessert ist. Ein bestimmter Bereich vor einem Fahrzeug wird durch eine auf dem Fahrzeug angebrachte Kamera erfasst. Das Fahrzeug bewegt sich dabei mit einer bestimmten Geschwindigkeit, nach dem Verstreichen eines festgelegten Zeitraums wird ein zweites Bild aufgenommen. Anhand der beiden Bilder werden solche Objekte extrahiert, bei denen es sich um Verkehrszeichen handeln könnte. Anhand der Änderung der Bildgröße der Objekte und des zurückgelegten Wegs des Fahrzeugs wird die Entfernung zu dem Objekt berechnet. Anschließend wird mit diesem Ergebnis eine Mustererkennung durchgeführt, um zu entscheiden, ob es sich bei dem Objekt um ein Verkehrszeichen handelt. Nachteilig ist jedoch, dass nicht ausgeschlossen werden kann, dass versehentlich ein Zeichen als Verkehrszeichen interpretiert wird, das sich an einem anderen Kraftfahrzeug befindet.

Der Erfindung liegt damit das Problem zugrunde, ein Kraftfahrzeug anzugeben, das hier Abhilfe schafft.

Dieses Problem wird durch die Merkmale des Anspruchs 1 gelöst.

Zur Lösung dieses Problems ist bei einem Kraftfahrzeug der eingangs genannten Art erfindungsgemäß vorgesehen, dass die Verarbeitungs- und Auswertemittel derart ausgebildet sind, dass ein an einem anderen fahrenden oder stehenden, in einem aufgenommenen Bild gezeigten Kraftfahrzeug befindliches, einem Verkehrszeichen ähnliches Zeichen, das keinen im Rahmen einer über die Verarbeitungs- und Auswertemittel erfolgenden Steuerung oder Regelung zu berücksichtigenden Regelungsgehalt besitzt, im Rahmen der Steuerung oder Regelung unberücksichtigt bleibt, und dass die Verarbeitungs- und Auswertemittel zum Erkennen des in dem aufgenommenen Bild gezeigten Kraftfahrzeugs und zum Ausmaskieren des das Kraftfahrzeug zeigenden Bildbereichs im Rahmen der Bildauswertung ausgebildet sind.

Die Verarbeitungs- und Auswertemittel sind also erfindungsgemäß derart konfiguriert, dass sie imstande sind, ein einem Verkehrszeichen ähnliches Zeichen wie z.B. die eingangs erwähnten Aufkleber oder dergleichen als solche zu erkennen bzw. zu vermeiden, dass solche Zeichen in irgendeiner Form fehlinterpretiert und ihr tatsächlich nicht gegebener Regelungsgehalt der Steuerung oder Regelung zugrunde gelegt wird. Dies ermöglicht es, dass die eingangs genannten Nachteile, die aus einer solchen Fehlinterpretation resultieren und mithin zu einer Verkehrsgefährdung führen können, vorteilhaft unterbleiben.

Erfindungsgemäß sind die Verarbeitungs- und Auswertemittel zum Erkennen eines in einem aufgenommenen Bild gezeigten Kraftfahrzeugs und zum Ausmaskieren des das Kraftfahrzeug zeigenden Bildbereichs im Rahmen der Bildauswertung ausgebildet. Dabei analysieren also die Verarbeitungs- und Auswertemittel ein aufgenommenes Bild dahingehend, ob in ihnen ein vorausfahrendes oder seitlich stehendes Kraftfahrzeug enthalten ist. Wird ein solches Kraftfahrzeug erfasst, so wird es generell aus dem im Rahmen einer Verkehrszeichenanalyse zu beurteilenden Bild ausmaskiert, d.h. es verbleibt nur noch ein Restbild, das dann der eigentlichen Verkehrszeichenanalyse zugrunde gelegt wird. Hierbei werden quasi alle Kraftfahrzeuge, gleich ob stehend oder sich bewegend ausgeblendet, so dass die Gefahr einer fehlerhaften Erfassung eines verkehrszeichenähnlichen Aufklebers unterbunden wird.

Zu diesem Zweck können die Verarbeitungs- und Auswertemittel vorzugsweise zum Erkennen eines Kraftfahrzeugs durch eine Symmetrieanalyse des Bilds ausgebildet sein. Ein vorausfahrendes Kraftfahrzeug, auch wenn es etwas seitlich versetzt zur eigentlichen Fahrbahn fährt und mithin etwas von der Seite aufgenommen wird, ist im Wesentlichen symmetrisch dargestellt. Unter Verwendung geeigneter Detektionsalgorithmen wie z.B. Kantenerkennungsalgorithmen oder dergleichen ist es nun möglich, ein solches Kraftfahrzeug durch Erfassen etwaiger Symmetrien, die ein beispielsweise von hinten dargestelltes Kraftfahrzeug immer besitzt, zu erfassen und anschließend auszublenden. Alternativ dazu bietet sich die Möglichkeit einer Bildfolgebetrachtung an. Bei dieser Erfindungsalternative beruht das Erkennen eines Kraftfahrzeugs darauf, dass sich ein stehender Gegenstand und ein sich bewegender Gegenstand unterschiedlich schnell dem eigenen sich bewegenden Kraftfahrzeug nähern. Aus der Information über die eigene Geschwindigkeit, die den Verarbeitungs- und Auswertemitteln ohne weiteres gegeben werden kann, da diesbezüglich Informationen von der üblichen Geschwindigkeitserfassung vorhanden sind, kann anhand zweier nacheinander aufgenommener Bilder erkannt werden, ob es sich um ein bewegendes Fahrzeug handelt oder ob ein Gegenstand ruht. Wird also beispielsweise ein einem Verkehrszeichen ähnliches Zeichen in einem Bild erfasst, so nähert es sich dem eigenen Fahrzeug schnell, wenn es sich um ein echtes Verkehrsschild, das steht, handelt. Handelt es sich aber um ein an einem Fahrzeug befindlichen Aufkleber, so nähert es sich wesentlich langsamer, da es sich selbst in die gleiche Richtung des Kraftfahrzeugs bewegt. In diesem Fall ändert sich die Größe des bei dieser Erfindungsalternative zuvor erfassten verkehrszeichenähnlichen Zeichens zwischen zwei nacheinander aufgenommenen Bildern nicht in dem Maß, wie sie sich bei Vergleich zweier ein stehendes Verkehrsschild zeigenden Bildern ändert, wo das Verkehrsschild wesentlich schneller größer wird. Man kann also anhand der Eigengeschwindigkeit und der Zeit zwischen zwei zu vergleichenden Bildern erfassen, ob es sich um ein bewegendes oder stehendes Zeichen handelt. Das sich bewegende Objekt, also das Fahrzeug, wird denn ausmaskiert. Im Rahmen dieser Berechnung ist natürlich auch die Kenntnis der Größe eines relevanten Verkehrsschilds oder Verkehrszeichens beachtlich, um zu errechnen, wie sich ein solches echtes Verkehrsschild innerhalb der Zeitspanne zwischen den beiden Bildern größenmäßig ändern müsste.

Eine Weiterbildung der Erfindung sieht vor, dass die Verarbeitungs- und Auswertemittel zum Erkennen der mit dem Kraftfahrzeug befahrenen Fahrbahn und zum Auswerten des aufgenommenen Bilds nur im die Fahrbahn und einen angrenzenden Fahrbahnbereich zeigenden Bildbereich ausgebildet ist. Nach dieser Erfindungsausgestaltung wird also nur der Bildbereich berücksichtigt, in dem überhaupt für die Fahrbahn, auf der sich das Fahrzeug bewegt, relevante verkehrsleitende Informationen vorhanden sein können.

Fährt das Fahrzeug beispielsweise auf der rechten Fahrbahn einer Autobahn, so werden sämtliche links davon befindlichen Bildbereiche ausgeblendet oder ausmaskiert, der Bildanalyse liegen dann nur noch die Bildbereiche, die die Fahrbahn und rechts davon den Standstreifen und den Bereich der Leitplanke zeigen, zugrunde. Entsprechendes gilt, wenn sich das Fahrzeug auf der linken Fahrspur einer Autobahn bewegt. Die relevanten Verkehrszeichen wären in diesem Fall links der Fahrspur oder bei Verkehrsleiteinrichtungen oberhalb davon. Hier werden folglich die rechts neben der Fahrbahn liegenden Bildbereiche ausgeblendet. Diese Erfindungsalternative eignet sich insbesondere bei zweispurigen Autobahnen.

Eine weitere Ausgestaltung der Erfindung sieht demgegenüber vor, dass die Verarbeitungs- und Auswertemittel zum Ermitteln einer Bewegung eines einem Verkehrszeichen ähnlichen Zeichens anhand einer Bildfolgebetrachtung wenigstens zweier seitlich nacheinander aufgenommener Bilder ausgebildet ist. Diese Erfassung eines sich bewegenden Verkehrszeichens basiert auf der bereits oben beschriebenen Bildfolgebetrachtung unter Zugrundelegung der eigenen Fahrgeschwindigkeit und dem Umstand, dass sich langsam oder schneller bewegende Objekte langsamer dem eigenen Fahrzeug nähern als ein stehendes Verkehrszeichen, was in einer unterschiedlichen Größenzunahme resultiert.

Eine zusätzliche Ausführungsform der Erfindung sieht demgegenüber vor, dass die Verarbeitungs- und Auswertemittel zum Erkennen eines einem Verkehrszeichen ähnlichen Zeichens auf Basis des über geeignete Erfassungsmittel erfassten Abstands zu einem das Zeichen aufweisenden Kraftfahrzeug und der Größe des Zeichens im Bild ausgebildet sind. Bei dieser Erfindungsausgestaltung wird ein richtiges oder falsches Verkehrszeichen über die Größe des Zeichens im Bild bestimmt. Ein übliches Verkehrszeichen ist bei einem bestimmten Abstand zum eigenen Kraftfahrzeug deutlich größer als ein an einem anderen Kraftfahrzeug befindlicher Aufkleber, welcher in der Regel nur wenige Zentimeter im Durchmesser ist. D.h. bei bekannter Entfernung kann auf diese Weise ohne Probleme zwischen einem echten und einem falschen Verkehrsschild unterschieden werden. Zur Abstandsmessung sind beispielsweise eine Stereokamera oder aber Abstandssensoren oder Radarsensoren, die in irgendeiner Form die Distanz zu einem vorausfahrenden Fahrzeug erfassen, verwendbar.

Eine besonders gute Zuverlässigkeit der Vermeidung von Fehlinterpretationen liegt in einer Kombination verschiedener der beschriebenen Erfassungs- und Analysealternativen.

Weitere Vorteile, Merkmale und Einzelheiten der Erfindung ergeben sich aus dem im folgenden beschriebenen Ausführungsbeispiel sowie anhand der Zeichnungen.

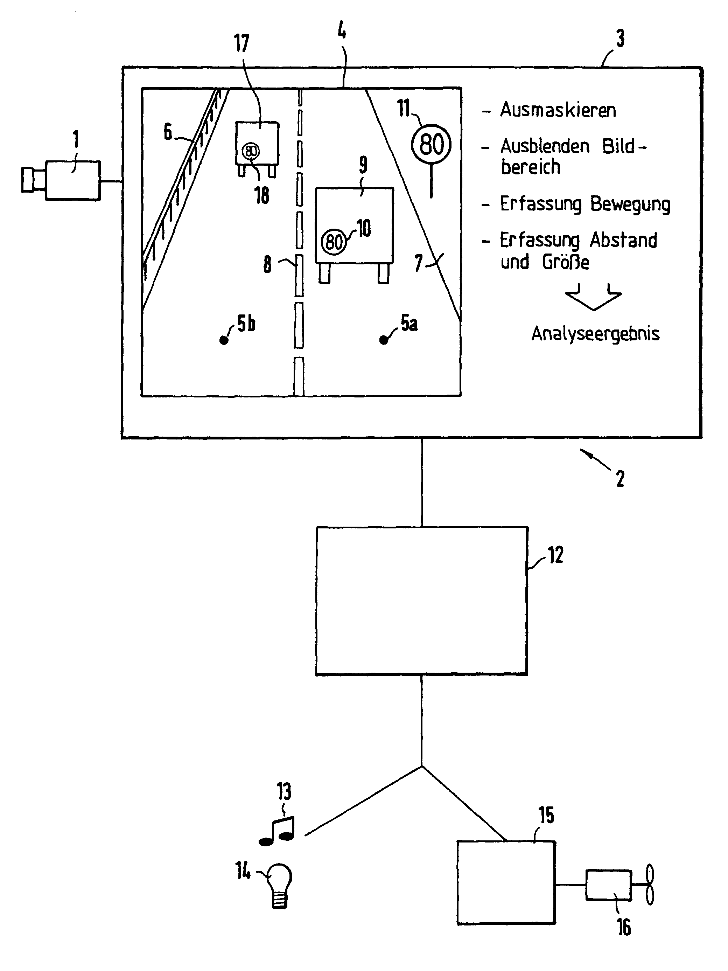

In dieser sind die relevanten Komponenten eines nicht näher gezeigten Kraftfahrzeugs, die für die erfindungsgemäße Situationsanalyse und -bewertung erforderlich sind, gezeigt. Über ein Bildaufnahmemittel 1 in Form einer Kamera, die beispielsweise im oberen Bereich der Windschutzscheibe nach vorne blickend angeordnet ist, werden kontinuierliche Bilder der Fahrbahn aufgenommen. Dem Bildaufnahmemittel 1 sind Verarbeitungs- und Auswertemittel 2 nachgeschalten, die zunächst ein Bildverarbeitungsmittel 3 umfassen, in dem die mit dem Bildaufnahmemittel aufgenommenen Bilder 4 analysiert werden. Ein exemplarisches, eine typische Fahrsituation zeigendes Bild 4 ist in der Figur gezeigt. Das Bild 4 zeigt die mit dem eigenen Kraftfahrzeug befahrene Fahrbahn 5a sowie die links davon befindliche Fahrbahn 5b. Die Fahrbahn 5b ist über eine seitliche Leitplanke 6, die Fahrbahn 5a über einen Seitenstreifen 7 randseitig begrenzt. Die Trennung ist über die Mittellinie 8 markiert. Auf der mit dem eigenen Kraftfahrzeug befahrenen Fahrbahn 5a fährt vor dem eigenen Kraftfahrzeug ein weiteres Kraftfahrzeug 9, im gezeigten Beispiel ein LKW oder ein Bus. An der Rückseite des Busses ist ein Zeichen 10, z.B. in Form eines Aufklebers, angebracht, das einem üblichen Verkehrszeichen, das die Geschwindigkeit auf einem nachfolgenden Fahrbahnabschnitt begrenzt, sehr ähnlich sieht. Diesem Zeichen 10 kommt jedoch kein solcher Regelungsgehalt zu, vielmehr gibt es in der Regel lediglich an, welche Höchstgeschwindigkeit das damit gekennzeichnete Kraftfahrzeug, hier also der LKW oder Bus 9, fahren darf. Im gezeigten Beispiel darf das Kraftfahrzeug 9 höchstenfalls 80 km/h fahren.

Im Bild 4 ist ferner ein bekanntes Verkehrszeichen 11 in Form eines Verkehrsschildes gezeigt, das am Seitenstreifen 7 feststehend angeordnet ist und die Höchstgeschwindigkeit für den nachfolgenden Fahrbahnabschnitt bestimmt. Im gezeigten Beispiel handelt es sich um ein geschwindigkeitsbegrenzendes Schild, das ein Geschwindigkeitsgebot von 80 km/h anzeigt.

Die Verarbeitungs- und Auswertemittel 2 sind nun imstande, durch geeignete programmtechnische Analysemöglichkeiten auf Basis entsprechender Mustererkennungsalgorithmen ein Verkehrsschild innerhalb des aufgenommenen Bildes zu analysieren und zu erkennen und das Analyseergebnis, ob also ein solches Schild im Bild gezeigt ist und wenn ja welches, an eine nachgeschaltete, ebenfalls einen Teil der Verarbeitungs- und Auswertemittel 2 bildenden Auswerteeinrichtung 12 zu geben, wo die Situation und der Regelungsgehalt des analysierten Verkehrszeichens ausgewertet und entschieden wird, ob in irgendeiner Form beispielsweise akustische oder optische Warnsignale 13, 14, die über die Auswerteeinrichtung 12 angesteuert werden, ausgegeben werden sollen, oder ob z.B. eine Motorsteuerung 15, die einen Antriebsmotor 16 des eigenen Kraftfahrzeugs steuert, angesprochen werden soll, um z.B. die eigene Fahrgeschwindigkeit im Hinblick auf ein Geschwindigkeitsgebot zu drosseln etc.

Beachtliche verkehrsbeeinflussende Regelungen werden lediglich mittels zugelassener und speziell dafür vorgesehener Verkehrszeichen, wie z.B. dem Verkehrszeichen 11 oder aber anderen Verkehrszeichen, z.B. in Form von verkehrsleitenden Wechselzeichen etc., gegeben. Ein Zeichen 10, das lediglich einem Verkehrszeichen ähnlich sieht, jedoch keinerlei Regelungscharakter für den Verkehrsfluss besitzt, darf als solches nicht erkannt oder interpretiert werden. Zu diesem Zweck sind die Verarbeitungs- und Auswertemittel 2 bzw. insbesondere das Bildverarbeitungsmittel 3 dazu ausgebildet, solche Zeichen, die keinen im Rahmen einer nachfolgenden Steuerung oder Regelung zu berücksichtigenden Regelungsgehalt besitzen, zu erkennen und im Rahmen der nachfolgenden Analyseverarbeitung unberücksichtigt zu lassen.

Erfindungsgemäß erfolgt die Zeichenerkennung dadurch, dass das aufgenommene Bild 4 zur Erfassung etwaiger Kraftfahrzeuge - und an solchen sind solche irreführenden Zeichen in der Regel angeordnet - ausgebildet ist. Das Bildverarbeitungsmittel 3 analysiert also das aufgenommene Bild 4 dahingehend, ob es ein vorausfahrendes oder beispielsweise seitlich versetzt hierzu fahrendes Kraftfahrzeug erfasst. Im gezeigten Beispiel fährt das Kraftfahrzeug 9 vor dem eigenen Fahrzeug. Die Erfassung kann z.B. aufgrund einer Symmetrieanalyse oder Symmetriebetrachtung geometrischer Strukturen im aufgenommenen Bild 4 erfolgen. In der Regel ist ein Kraftfahrzeug, das von hinten oder schräg von hinten im Bild sichtbar ist, symmetrisch zu seiner vertikalen Mittellinie. Durch geeignete Analysealgorithmen kann eine solche Symmetrie eines im Bild gezeigten Gegenstandes, der per se z.B. im Rahmen einer Kantendetektion oder dergleichen ermittelt werden kann, erfasst werden. Ist ein solcher symmetrischer Gegenstand im Bild vorhanden, so wird er im Bild ausmaskiert, d.h. der diesen Gegenstand zeigende Bildbereich wird ausgeschnitten oder in irgendeiner Form markiert, dass er für die nachfolgende Bildanalyse, in der ein "echtes" Verkehrszeichen ermittelt werden soll, unberücksichtigt bleibt. Zweckmäßig sind die Symmetriebetrachtungsalgorithmen dergestalt angelegt, dass sie vornehmlich symmetrische eckige Gegenstände, die im Bild gezeigt sind, erfassen. Ein rundes Verkehrsschild, wie z.B. das Verkehrszeichen 11, ist insoweit aufgrund seiner Kreisform ebenfalls symmetrisch, es darf jedoch bei dieser Symmetriebetrachtung nicht durch das Analyseraster fallen.

Ist nun z.B. das Kraftfahrzeug 9 im Rahmen der Symmetrieanalyse erfasst und erkannt worden und wird das "Restbild" analysiert, so erkennen die Analysealgorithmen das tatsächlich den Verkehrsfluss regelnde Verkehrszeichen 11. Dieses wird als Analyseergebnis an die Auswerteeinrichtung 12 gegeben, die die Analyseinformation entsprechend verarbeitet.

Eine weitere Möglichkeit, irreführende Zeichen zu unterdrücken besteht darin, bestimmte Bildbereiche, die im Rahmen der eigentlichen ein regelndes Verkehrszeichen suchenden Bildanalyse keine Rolle spielen, da in diesen Bereichen ein für die eigene Fahrbahn relevantes Verkehrszeichen nicht stehen kann, auszublenden. Im gezeigten Beispiel bewegt sich das eigene Kraftfahrzeug auf der Fahrbahn 5a. Die Fahrbahn 5b, auf der sich im gezeigten Bespiel ebenfalls ein Kraftfahrzeug 17 mit einem rückseitig angebrachten irreführenden Zeichen 18 bewegt, kann durch geeignete Analysealgorithmen im Bild ohne weiteres erkannt werden, z.B. durch Erfassung der Mittellinie 8 und der Leitplanke 6. Dieser Bildbereich kann nun sofort ausgeblendet oder sonst wie markiert werden, dass er im Rahmen der nachfolgenden Verkehrszeichenanalyse nicht beachtet wird. Denn ein Verkehrszeichen, das einen Regelungscharakter für die eigene befahrene Fahrbahn 5a besitzt, steht in der Regel entweder rechts im Bereich des Seitenstreifens (wie im Bild 4 gezeigt), oder bei Wechselverkehrszeichen unmittelbar oberhalb der eigenen Fahrbahn. Wird also die nicht befahrene Fahrbahn und der zugeordnete seitliche Bildbereich dazu (Leitplanke und der Bereich daneben) ausgeblendet, so kann der zu analysierende Bildbereich deutlich eingegrenzt werden, zum anderen fallen durch das Ausblenden Kraftfahrzeuge, wie z.B. das Kraftfahrzeug 17, im Rahmen der nachfolgenden Restbildanalyse bereits weg und müssen nicht gesondert erkannt werden. Wäre in diesem Fall z.B. das Kraftfahrzeug 9 nicht vorhanden, sondern lediglich das Kraftfahrzeug 17, so wäre im Restbild nach dem Ausblenden der linken Fahrbahn 5b kein irreführendes Zeichen mehr vorhanden, so dass lediglich noch das eigentliche Verkehrszeichen 11 zu analysieren wäre. Diese Möglichkeit, nicht relevante Bildbereiche ausblenden zu können, kann selbstverständlich auch unterstützend zum eingangs beschriebenen Ausmaskieren angewendet werden.

Eine weitere Möglichkeit, ein irreführendes Verkehrszeichen erfassen zu können besteht darin zu überprüfen, ob ein solches mit einem üblichen Verkehrszeichen verwechselbares Zeichen sich bewegt. Dies kann z.B. im Rahmen einer Bildfolgebetrachtung erfolgen. D.h. man betrachtet zwei nacheinander mit einem bekannten Zeitversatz Δt aufgenommene Bilder. Im zeitlich früher aufgenommenen Bild, z.B. in dem in der Figur gezeigten Bild 4, ist das Kraftfahrzeug 9 etwas weiter hinten im Bild gezeigt, Entsprechendes gilt für das Verkehrszeichen 11. Im nach der Zeit Δt aufgenommenen zweiten Bild ist sowohl das Kraftfahrzeug 9 als auch das Verkehrszeichen 11 näher gezeigt, da sich das eigene Kraftfahrzeug näher an beide heranbewegt hat. Aufgrund der Eigenbewegung des Kraftfahrzeugs 9 jedoch ändert sich sein Abstand zum eigenen Kraftfahrzeug wesentlich weniger als der des feststehenden Verkehrsschilds 11. Unter Zugrundelegung der eigenen Geschwindigkeit, die kraftfahrzeugseitig bekanntermaßen vorliegt, kann man nun ermitteln, welcher der Gegenstände sich innerhalb der zwei Bildaufnahmen bewegt hat, da sich die Größe der Gegenstände in den Bildern unterschiedlich ändert. Man kommt im geschilderten Beispiel zwingend zu dem Ergebnis, dass sich das Kraftfahrzeug 9 bewegt hat, während das Verkehrszeichen 11 feststeht. Infolgedessen muss es sich bei dem Kraftfahrzeug 9 um einen sich bewegenden Gegenstand handeln, der ein irreführendes Zeichen trägt. Im Rahmen der Bildanalyse kann dieser Gegenstand nun beispielsweise wiederum ausmaskiert oder sonst wie gekennzeichnet werden, dass er nicht in die Verkehrszeichenanalyse mit eingeht. Entsprechend kann natürlich auch bezüglich des zweiten im Bild gezeigten Kraftfahrzeugs 17 verfahren werden.

Neben der Detektion eines irreführenden Zeichens auf Basis einer Bildfolgebetrachtung ist es auch denkbar, das Zeichen allein dadurch zu qualifizieren, dass bei einem erfassten Abstand seine Größe im Bild nicht mit der Größe, die ein beachtliches Verkehrsschild bei dem gegebenen Abstand im Bild hätte, übereinstimmt. Wie bereits ausgeführt, sind solche irreführenden Zeichen, z.B. in Form der üblichen Aufkleber, nur ca. 15 cm im Durchmesser, während übliche Verkehrsschilder knapp 50 cm im Durchmesser betragen. Bei einem exemplarisch abgenommenen Abstand von 50 m zum vorausfahrenden Kraftfahrzeug ist also ein erfasstes irreführendes Zeichen deutlich kleiner als ein beachtliches Verkehrszeichen im Bild erscheinen würde. Infolgedessen kann also bei einer auf dieser Weise erfassten deutlichen Größendifferenz bei bekanntem Abstand auch auf ein irreführendes Zeichen geschlossen werden. Zur Ermittlung des Abstands sind z.B. Abstandssensoren oder Radarsensoren oder eine Stereokamera (das Bildaufnahmemittel 1 wäre dann eine solche) verwendbar.

Abschließend ist darauf hinzuweisen, dass die genannten weiteren Analysemethoden selbstverständlich auch kumulativ miteinander angewendet werden können, um auf diese Weise mehrere Möglichkeiten im Rahmen einer Plausibilitätsprüfung, ob es sich nun tatsächlich um ein irrelevantes und irreführendes Zeichen 10 oder um ein tatsächlich geltendes Verkehrszeichen 11 handelt, durchzuführen.

In jedem Fall erfolgt in der Auswerteeinrichtung 12 eine entsprechende Auswertung und Bewertung des Analyseergebnisses mit den möglichen eingangs beschriebenen Folgen.

## Patentansprüche

1. Kraftfahrzeug mit einem Bildaufnahmemittel (1) zum Aufnehmen der mit dem Kraftfahrzeug befahrenen Fahrbahn (5a) und mit Verarbeitungs- und Auswertemitteln (2), die zum Bestimmen eines etwaigen im Bild (4) sichtbaren Verkehrszeichens (11) und dessen Regelungsinhalts ausgebildet sind,
**dadurch gekennzeichnet, dass** die Verarbeitungs- und Auswertemittel (2) zum Erkennen eines in einem aufgenommenen Bild (4) gezeigten Kraftfahrzeugs (9, 17) und zum Ausmaskieren des das Kraftfahrzeug (9, 17) zeigenden Bildbereichs im Rahmen der Bildauswertung ausgebildet sind,
womit ein an dem anderen fahrenden oder stehenden, in dem aufgenommenen Bild (4) gezeigten Kraftfahrzeug (9, 17) befindliches, einem Verkehrszeichen (11) ähnliches Zeichen (10, 18), das keinen im Rahmen einer über die Verarbeitungs- und Auswertemittel (2) erfolgenden Steuerung oder Regelung zu berücksichtigenden Regelungsgehalt besitzt, im Rahmen der Steuerung oder Regelung unberücksichtigt bleibt.

2. Kraftfahrzeug nach Anspruch 1,
**dadurch gekennzeichnet,**
**dass** die Verarbeitungs- und Auswertemittel (2) zum Erkennen eines Kraftfahrzeugs (9, 17) durch eine Symmetrieanalyse des Bilds (4) und/oder durch eine Bildfolgebetrachtung ausgebildet ist.

3. Kraftfahrzeug nach Anspruch 1 oder 2,
**dadurch gekennzeichnet,**
**dass** die Verarbeitungs- und Auswertemittel (2) zum Erkennen der mit dem Kraftfahrzeug befahrenen Fahrbahn (5a) und zum Auswerten des aufgenommenen Bilds (4) nur im die Fahrbahn (5a) und einen angrenzenden Fahrbahnbereich (7) zeigenden Bildbereich ausgebildet ist.

4. Kraftfahrzeug nach einem der vorangehenden Ansprüche,
**dadurch gekennzeichnet,**
**dass** die Verarbeitungs- und Auswertemittel (2) zum Ermitteln einer Bewegung eines einem Verkehrszeichen ähnlichen Zeichens (10, 18) anhand einer Bildfolgebetrachtung wenigstens zweier zeitlich nacheinander aufgenommener Bilder ausgebildet ist.

5. Kraftfahrzeug nach einem der vorangehenden Ansprüche,
**dadurch gekennzeichnet,**
**dass** die Verarbeitungs- und Auswertemittel (2) zum Erkennen eines einem Verkehrszeichen ähnlichen Zeichens (10, 18) auf Basis des über geeignete Erfassungsmittel erfassten Abstands zu einem das Zeichen (10, 18) aufweisenden Kraftfahrzeugs (9, 17) und der Größe des Zeichens (10, 18) im Bild ausgebildet sind.

6. Kraftfahrzeug nach Anspruch 5,
**dadurch gekennzeichnet,**
**dass** die Erfassungsmittel zur Bestimmung des Abstands eine Stereokamera oder Abstandssensoren oder Radarsensoren umfassen.

## Claims

1. Motor vehicle having image-taking means (1) for photographing the carriageway (5a) travelled by the motor vehicle and having processing and evaluation means (2) configured to determine a traffic sign (11) which may be visible in the image (4) and the regulatory content of said traffic sign (11), **characterised in that** the processing and evaluation means (2) are configured for recognising a motor vehicle (9, 17) shown in a photographed image (4) and for masking out in the context of the image evaluation the image area showing the motor vehicle (9, 17), whereby a sign (10, 18) resembling a traffic sign (11) located on the other moving or stationary motor vehicle (9, 17) shown in the photographed image (4), which sign (10, 18) does not contain regulatory content to be taken into account in the context of a control or regulation carried out via the processing and evaluation means (2), is not taken into account in the context of the control or regulation.

2. Motor vehicle according to claim 1, **characterised in that** the processing and evaluation means (2) for recognising a motor vehicle (9, 17) are configured as a symmetry analysis of the image (4) and/or as an image sequence examination.

3. Motor vehicle according to claim 1 or 2, **characterised in that** the processing and evaluation means (2) for recognising the carriageway (5a) travelled by the motor vehicle and for evaluating the image photographed (4) are configured only in the image area showing the carriageway (5a) and an adjacent roadway area (7).

4. Motor vehicle according to any one of the preceding claims, **characterised in that** the processing and evaluation means (2) for detecting a movement of a sign (10, 18) resembling a traffic sign are configured on the basis of an image sequence examination of at least two images photographed in temporal succession.

5. Motor vehicle according to any one of the preceding claims, **characterised in that** the processing and evaluation means (2) for recognising a sign (10, 18) resembling a traffic sign are configured on the basis of the distance from a motor vehicle (9, 17) carrying the sign (10, 18), said distance being detected by means of suitable detection means, and on the basis of the size of the sign (10, 18) in the image.

6. Motor vehicle according to claim 5, **characterised in that** the detection means for determining the distance include a stereo camera or distance sensors or radar sensors.

## Revendications

1. Véhicule automobile, comprenant un moyen d'enregistrement d'image (1) pour enregistrer la voie de roulement (5a) sur laquelle se déplace le véhicule automobile, et avec des moyens de traitement et d'évaluation (2), réalisés pour déterminer un éventuel panneau de signalisation (11) visible dans l'image (4) et son contenu réglementaire,
**caractérisé en ce que** les moyens de traitement et d'évaluation (2) sont réalisés pour identifier un véhicule automobile (9, 17) représenté dans une image (4) enregistrée et pour, dans le cadre de l'évaluation de l'image, isoler par masquage la zone d'image, montrant le véhicule automobile (9, 17), faisant qu'un panneau (10, 18), analogue à un panneau de signalisation (11), se trouvant sur l'autre véhicule automobile (9, 17) se déplaçant ou étant stationnaire et représenté sur l'image (4) enregistrée, panneau ne comprenant aucun contenu réglementaire à prendre en considération dans le cadre d'une commande ou régulation se faisant par l'intermédiaire des moyens de traitement et d'évaluation (2), reste hors de considération dans le cadre de la commande ou de la régulation,

2. Véhicule automobile selon la revendication 1, **caractérisé en ce que** les moyens de traitement et d'évaluation (2) sont réalisés pour identifier un véhicule automobile (9, 17) au moyen d'une analyse par symétrie de l'image (4) et/ou au moyen d'une observation de la succession d'images.

3. Véhicule automobile selon la revendication 1 ou 2, **caractérisé en ce que** les moyens de traitement et d'évaluation (2) sont réalisés pour identifier la voie de roulement (5a) sur laquelle le véhicule automobile se déplace et pour évaluer l'image (4) enregistrée, uniquement dans la zone d'image montrant la voie de roulement (5a) et une zone de voie de roulement (7) limitrophe.

4. Véhicule automobile selon l'une des revendications précédentes, **caractérisé en ce que** les moyens de traitement et d'évaluation (2) sont réalisés pour déterminer un déplacement d'un panneau (10, 18) analogue à un panneau de signalisation, ceci à l'aide d'une observation d'une succession d'images, faite d'au moins deux images enregistrées temporellement l'une après l'autre.

5. Véhicule automobile selon l'une des revendications précédentes, **caractérisé en ce que** les moyens de traitement et d'évaluation (2) sont réalisés pour identifier un panneau (10, 18) analogue à un panneau de signalisation, d'après l'espacement, détecté par des moyens de détection appropriés, vis-à-vis d'un véhicule automobile (9, 17) présentant le panneau (10, 18) et d'après la taille du panneau (10, 18) dans l'image.

6. Véhicule automobile selon la revendication 5, **caractérisé en ce que** les moyens de détection devant détecter l'espacement comprennent une caméra stéréo, ou bien des capteurs d'espacement, ou bien des capteurs radar.
